# EUROPEAN PATENT APPLICATION

(11) **EP 2 738 657 A2**
(43) Date of publication of application: **04.06.2014**
(21) Application number: 13194725.1
(22) Date of filing: 27.11.2013
(51) Int. Cl.: G06F 3/0482, G06F 3/0488, G06F 9/44

(54) **Method and apparatus for content processing**

(30) Priority: 30.11.2012 KR 20120137841
(71) Applicant: Samsung Electronics Co., Ltd, Gyeonggi-do 443-742 (KR)
(72) Inventor: Choi, Jinho, Gyeonggi-do 443-742 (KR)
(74) Representative: Jenkins, Richard Gavin

(57) **Abstract**

Methods and apparatus for content processing are provided. A plurality of content is displayed. It is determined whether an input is received for moving a selected content of the plurality of content onto a target content of the plurality of content. The target content is configured as a master content, when the input is received. The selected content is linked to the master content. An indicator of the selected content is displayed on the master content. It is determined whether an input is received for separating the content from the master content. A link between the content and the master content is released, when the input is received. The indicator of the content is removed from the master content.

## Description

### BACKGROUND OF THE INVENTION

### 1. Field of the Invention

The present invention relates generally to a method and an apparatus for content processing and, more particularly, although not exclusively, to an improved method for integrally processing correlated contents and a corresponding mobile terminal.

### 2. Description of the Related Art

Mobile terminals are generally capable of both processing various contents and performing telephony functions. Mobile terminals may also be capable of displaying a plurality of contents on a single screen according to a content use pattern of the user, and selectively processing the contents. Specifically, a mobile terminal may be provided with a viewer application for displaying the plurality of contents on the screen in a tile or portfolio view. The contents that are simultaneously displayed on the screen may be of different types, such as, for example, audio content, video content, pictures, documents, and maps.

Certain contents that are simultaneously displayed on the screen may be correlated. For example, correlated content may include photos taken on a trip and voice and/or text notes about the photos. Since the photos and voice and/or text notes are correlated content, it is preferable to integrally manage these contents. However, conventional content management methods display correlated contents on the screen in free-form layout style without providing information regarding a relationship between the correlated contents.

### SUMMARY OF THE INVENTION

An aim of certain embodiments of present invention is to address at least the above problems and/or disadvantages and to provide at least the advantages described below. Accordingly, an aspect of the present invention provides an apparatus and a method for displaying and integrally processing correlated contents among the contents stored in the portable terminal. It is an aim of certain embodiments of the invention to solve, mitigate or obviate, at least partly, at least one of the problems and/or disadvantages associated with the prior art. Certain embodiments aim to provide at least one of the advantages described below.

In accordance with an aspect of the present invention, a method is provided for content processing. A plurality of contents is displayed. It is determined whether an input is received for moving a selected content of the plurality of contents onto a target content of the plurality of contents. The target content is configured as a master content, when the input is received. The selected content is linked to the master content. An indicator of the selected content is displayed on the master content.

In accordance with another aspect of the present invention, a method for content processing is provided. An indicator of content linked to master content is displayed on the master content. It is determined whether an input is received for separating the content from the master content. A link between the content and the master content is released, when the input is received. The indicator of the content is removed from the master content.

In accordance with still another aspect of the present invention, an apparatus is provided that includes a display that displays a plurality of contents, an input unit that receives input for processing content, and a memory that stores link information of linked contents. The apparatus also includes a control unit that determines whether an input is received for moving a selected content of the plurality of contents onto a target content of the plurality of contents, configures the target content as a master content when the input is received, links the selected content to the master content, and displays the master content with an indicator of the selected content.

In accordance with a further aspect of the present invention, an article of manufacture for content processing is provided that includes a machine readable medium containing one or more programs, which when executed implement the steps of: displaying a plurality of contents; determining whether an input is received for moving a selected content of the plurality of contents onto a target content of the plurality of contents; configuring the target content as a master content, when the input is received; linking the selected content to the master content; and displaying an indicator of the selected content on the master content. Another aspect of the invention provides a computer program comprising instructions arranged, when executed, to implement a method and/or apparatus in accordance with any one of the above-described aspects. A further aspect provides machine-readable storage storing such a program.

It will be appreciated from the following description that, in certain embodiments of the invention, features concerning the graphic design of user interfaces are combined with interaction steps or means to achieve a technical effect. Certain embodiments aim to achieve the technical effect of lowering a burden (e.g. a cognitive, operative, operational, operating, or manipulative burden) of a user when performing certain computer or device interactions. Certain embodiments aim to achieve the technical effect of providing a more efficient man-machine (user-machine) interface.

### BRIEF DESCRIPTION OF THE DRAWINGS

The above and other aspects, features, and advantages of the present invention will be more apparent from the following detailed description when taken in conjunction with the accompanying drawings, in which:
FIG. 1 is a block diagram illustrating a configuration of a mobile terminal, according to an embodiment of the present invention;
FIG. 2 is a flowchart illustrating a content processing methodology in the mobile terminal, according to an embodiment of the present invention;
FIG. 3 is a diagram illustrating screens displayed on the mobile terminal in the methodology of FIG. 2, according to an embodiment of the present invention;
FIG. 4 is a flowchart illustrating a content item processing methodology in the mobile terminal, according to an embodiment of the present invention;
FIGS. 5A and 5B are diagrams illustrating screens displayed on the mobile terminal in the methodology of FIG. 4, according to an embodiment of the present invention;
FIG. 6 is a diagram illustrating a configuration of a detailed view window of master content for use in the content processing methodology, according to an embodiment of the present invention;
FIG. 7 is a flowchart illustrating a methodology for separating linked content from the master content and editing the separated content, according to an embodiment of the present invention;
FIG. 8 is a flowchart illustrating a linked content separation methodology from FIG. 7, according to an embodiment of the present invention;
FIGS. 9A and 9B are diagrams illustrating screens displayed in the mobile terminal in the linked content separation methodology of FIG. 8, according to an embodiment of the present invention;
FIG. 10 is a flowchart illustrating a separated content editing methodology of FIG. 7, according to an embodiment of the present invention; and
FIGS. 11A to 11E are diagrams illustrating screens displayed in the mobile terminal in the separated content editing methodology of FIG. 10, according to an embodiment of the present invention.

### DETAILED DESCRIPTION OF EMBODIMENTS OF THE PRESENT INVENTION

Embodiments of the present invention are described in detail with reference to the accompanying drawings. The same or similar components may be designated by the same or similar reference numerals although they are illustrated in different drawings. Detailed descriptions of constructions or processes known in the art may be omitted to avoid obscuring the subject matter of the present invention.

Embodiments of the present invention provide an apparatus and a method for displaying and processing a plurality of correlated contents of different types as integrated content. The content to which other contents are linked is referred to as master content, and the master content is selected by the user. Correlated contents may be linked to the master content. The mobile terminal is capable of providing a viewer, having a tile or portfolio view, for showing the contents on a screen. The viewer shows the contents in the form of thumbnails and, if a thumbnail is selected, a detailed view of the selected content is provided. In an embodiment of the present invention, the mobile terminal is capable of integrating correlated contents having the same subject using a content mixer for integral review of the contents. The master content is capable of displaying and processing various content formats associated with the correlated contents.

The mobile terminal advantageously mixes a plurality of correlated contents into an integrated content, checks individual content without entering an individual content review mode or navigating all of the linked contents entirely, and organizes distributed contents into simplified groups on the screen.

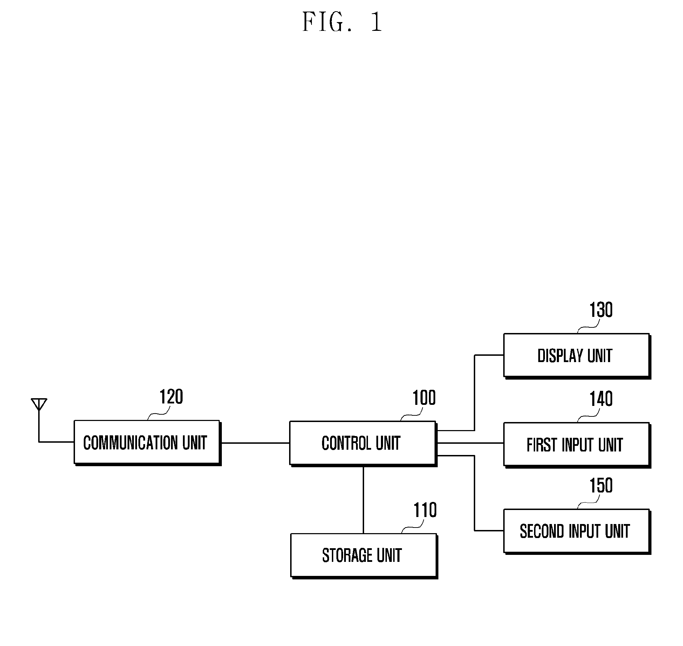

FIG. 1 is a block diagram illustrating a configuration of the mobile terminal, according to an embodiment of the present invention. the mobile terminal may be embodied as any type of digital device including, for example, a mobile phone such as smartphone, an MP3 player, a tablet Personal Computer (PC), and a desktop computer.

Referring to FIG. 1, a communication unit 120 of the mobile terminal is responsible for radio communication with a base station or another terminal. The communication unit 120 may include, for example, a transmitter for frequency up-converting and amplifying a signal to be transmitted, and a receiver for low noise amplifying and frequency down-converting a received signal. The communication unit 120 may also include a modulator and demodulator. The modulator performs modulation to generate a modulation signal to the transmitter, and the demodulator performs demodulation on the signal received by the receiver. The modulator/demodulator may modulate/demodulate signal of at least one of Long-Term Evolution (LTE), Wideband Code Division Multiple Access (WCDMA), Global System for Mobile communication (GSM), Wireless-Fidelity (Wi-Fi), Wireless Broadband (WiBro), Near Field Communication (NFC), and Bluetooth. In an embodiment of the present invention, it is assumed that the communication unit 120 includes LTE, Wi-Fi, and Bluetooth communication modules.

A control unit 100 of the mobile terminal controls overall operations of the mobile terminal. The control unit 100 controls a viewer mode for displaying a plurality of contents on a single screen, links selected contents to master content, and displays the master content with indicators representing the linked contents.

A memory 110 of the mobile terminal may include a program memory for storing an Operating System (OS) of the mobile terminal and a program according to an embodiment of the present invention. The memory 110 may also include a data memory for storing tables for use in the operation of the mobile terminal and data generated by the applications running in the mobile terminal. According to an embodiment of the present invention, the memory 110 stores link information on contents that are integrated with the master content under the control of the control unit 100.

A display unit 130 of the mobile terminal displays currently running applications and/or contents under the control of the control unit 100. The display unit 130 may be embodied as a Liquid Crystal Display (LCD) or an Organic Light Emitting Diode (OLED). A first input unit 140 may be embodied as a capacitive or resistive touchscreen to generate information on the position of a touch (e.g., a finger touch) for the control unit 100. A second input unit 150 may include, for example, an Electro-Magnetic Sensor (EMR) sensor pad to detect a pen touch and generate a corresponding touch signal for the control unit 100. The display unit 130, the first input unit 140, and the second input unit 150 may be integrated into a single module.

In the above-described mobile terminal, the control unit 100 is capable of controlling the display unit 130 to display different types of content. The viewer displays a plurality of contents in a tile view. User input that selects and moves certain content to another content (i.e., master content), is detected by the control unit 100 through one of the first and second input units 140 and 150. The selected contents are linked to the master content, and an indicator of the contents linked to the master content is displayed on the master content.

In the following description, it is assumed that the indicator is represented by an icon indicating the type of the content. It is also assumed that the user input is a drag and drop operation. Specifically, the user may input a touch to select the content to be integrated, and drag the selected object on a position of the master content before releasing the touch. The control unit 100 detects the touched position to select the content and moves the selected content according to the drag action. The icon of the selected content is displayed at the display region of the master content. The selected content is stored in the memory 110 as linked to the master content, such that the linked content disappears from the screen of the display unit 130. If multiple contents are linked, the icons of the contents linked to the master content are generated and displayed sequentially, and the content information stored in the memory 110 is also linked sequentially.

If the master content to which at least one content is linked is selected, it is detected by the control unit 100 through one of the first and second input units 140 and 150, and the control unit 100 controls the display unit 130 to display detailed information on the contents linked to the master content. The detailed information on the contents are displayed as aligned from top to bottom, or from left to right, in series, and the user is capable of selecting next content or previous content to display detailed information thereon in a detailed view.

The contents linked to the master content may be separated from the master content. If the user selects an icon displayed on the master content and drags and drops the selected icon outside of the master content, it is detected by the control unit 100 through one of the first and second input units 140 and 150. The control unit 100 displays a thumbnail image of the content corresponding to the selected icon at the drop position. The control unit 100 releases the link between the corresponding content and the master content, and controls the display unit 130 such that the icon of the corresponding content is removed from the master content.

As described above, the content processing method, according to an embodiment of the present invention, links at least one content to master content in response to user input, such as, for example, a drag an drop operation, and displays the icon of the linked content on the maser content. If the master content is selected (e.g. tapped), the control unit 100 controls the display unit 130 to display a detailed view of the contents linked to the master content, such that the user can review the contents linked to the master content. The control unit 100 is capable of controlling display of the linked content as aligned in an order of integration. The control unit 100 is also capable of displaying icons of the linked contents as aligned in the order of integration. For example, the control unit 100 is capable of displaying file type icons of thumbnail images in series, stacked from right to left. If the master content is selected, the control unit 100 controls display of a detailed view screen of the contents linked to the master content. The master content is placed at the first position (e.g., a top most position in a portrait mode, and a left most position in a landscape mode) followed by contents in a sequential order that they were linked (e.g., from top to bottom in the portrait mode).

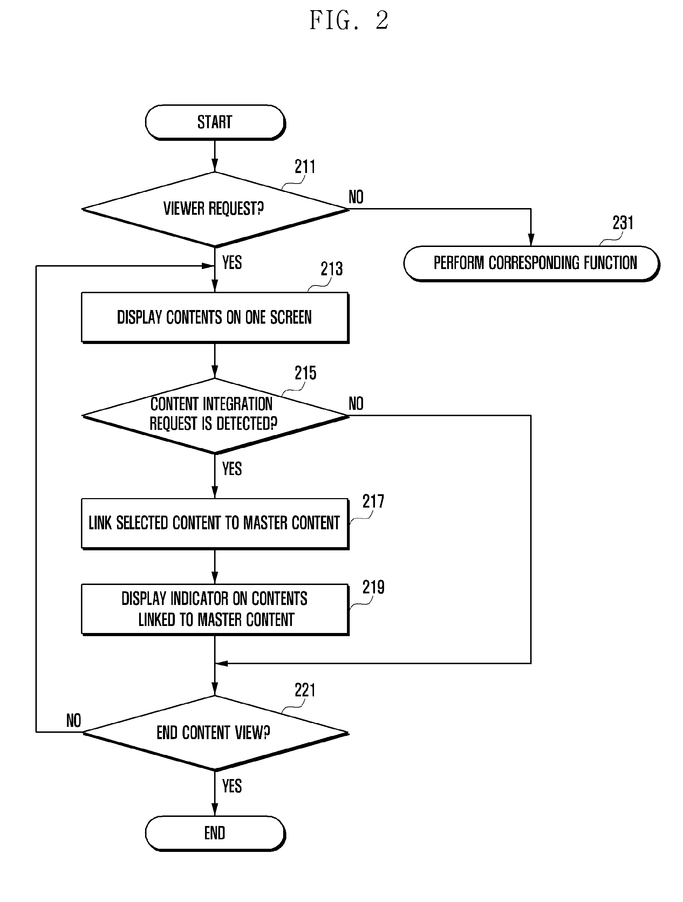

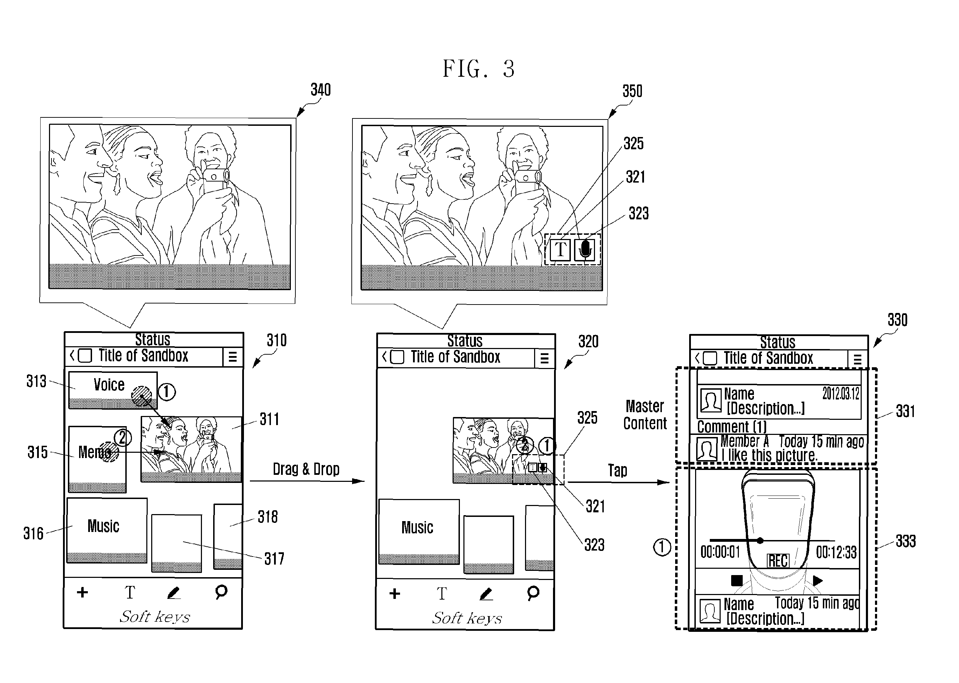

FIG. 2 is a flowchart illustrating the content processing methodology of the portable terminal, according to an embodiment of the present invention. FIG. 3 is a diagram illustrating screens displayed in the mobile terminal in the methodology of FIG. 2, according to an embodiment of the present invention.

Referring to FIGS. 2 and 3, if user input is detected, the control unit 100 determines whether the user input is for a viewer request, in step 211. Specifically, the control unit 100 determines whether the user input is a request to display a tile or portfolio view. If the user input is not for the viewer request, a function corresponding to the user input is performed, in step 231. If the user input is for a viewer request, the viewer request is executed and the display unit 130 displays a plurality of content on a viewer screen, in step 213. The content may be displayed in the form of thumbnail images in a thumbnail view mode. The content also may be distributed on the screen of the display unit 130 so as to be rearranged in response to input, such as, for example, the user's touch. The content may be of different content types. Specifically, the content may include multimedia content (such as, for example, audio content and video content), photos, memos, documents, etc. A first screen 310 of FIG. 3 displays contents, at step 213. Picture content 311, voice content 313, memo content 315, music content 316, and contents 317 and 318 are content thumbnail images.

Some or all of the contents 311 to 318 may be correlated as having the same subject. It is preferable to integrally manage correlated content. The control unit 100 configures one of the correlated contents as a master content based on user interaction, and links the other correlated content to the master content. The master content is displayed along with icons of the linked contents. It is assumed that the user interaction is a drag-and-drop operation.

In step 215 of FIG. 2, it is determined whether a content integration request is detected. If a content integration request is not detected, the methodology of FIG. 2 proceeds to step 221, which is described in greater detail below. In screen 310 of FIG. 3, if the user inputs a touch to select the content 313 and drags and drops the content 313 onto a position of the content 311, the control unit 100 interprets the user interaction as a content integration request, at step 215.

If the content integration request is detected, the selected content is linked to the master content, in step 217 of FIG. 2. With respect to FIG. 3, the control unit 100 configures the content item 311 as the master content, links the dropped content 313 to the master content 311. In step 219, an indicator of content linked to the master content is displayed. With respect to FIG. 3, an icon of the linked content 313 is displayed on the master content 311. The control unit 100 removes the linked content 313 from its original position on the viewer.

If the user inputs a touch to select the content 315 and drags and drops the selected content 315 onto the master content 311, the control unit links the dropped content 315 to the master content 311 and displays the icon of the linked content 315 on the master content 311.

When a plurality of contents are displayed on the screen of the display unit 130, as shown in the screen 310 of FIG. 3, if user interaction for linking to the master content is detected, the control unit 100 links the selected content 313 and 315 to the master content 311 and displays icons 321 and 323 representing the respective linked contents 313 and 315, as shown in screen 320. The contents may have different metadata according to content type as listed below in Table 1.

**Table 1**

| No | content type | Metadata |
|---|---|---|
| 1 | Image | Title, shooting date/time, location, Face tagging |
| 2 | Picture | EXIF shooting data |
| 3 | Recorded audio | Title, Description, playback time, recording time |
| 4 | Recorded video | Title, Description, shooting date, playback time, location |
| 5 | Music - track | Album art / title / Tracks / Biography / Discography / |
| 6 | Music - album | Review / Credits / Others |
| 7 | Music - playlist | Playlist name, number of songs, creation date, creator (Owner) |
| 8 | Music hub content | Music track or Album information, Album art, Artist, Genre, Homepage, Movie clip |
| 9 | Video hub content | Premiere year, rank, running time, File size, compatible device, Genre, Actors, Directors, synopsis, shop URL address |
| 10 | Web clip | Thumbnail image, Title, Style, URL address, Hyperlink, Video clip |
| 11 | vCard | name, nickname, address, phone number, mail address, relationship, SNS ID, Homepage, office, position, department, birthday, Photo ID |
| 12 | vCalendar | Schedule title, time, participant, location |
| 13 | Memo | Memo title, writer, written time, Location, related Meeting (Schedule), share log |
| 14 | Quote from e-Book | Thumbnail image, Title, URL address, Hyperlink |
| 15 | Readers hub content | Author, book title, published date, purchase date, summary, contents, Bookmark record, price, seller |
| 16 | Location | Captured map image, POI information |
| 17 | Application | Title, Review, Description, price, URL |

The control unit 100 links the content 313 and 315 to the master content 311 and removes the content 313 and 315 from their original location, as shown in the screen 320 of FIG. 3. The master content 311 is provided with an icon display region 325 for showing icons of linked content. The control unit 100 may stack the icons in the icon display region 325. The icon display region 325 of the master content may be configured such that the linked content items are arranged from left to right in series, as shown in the screen 320.

Through the methodology of FIG. 2, the master content 311, in a state denoted by reference number 340, is updated with the linked contents icons so as to be displayed in a state denoted by reference number 350. The control unit 100 may display the master content to be distinct from other content with indicators of the types and number of linked content. When multiple content are linked, the corresponding icons may be arranged in linked order with an indication of the number of linked content icons per content type. If any of the icons displayed in the icon display region 325 is selected by a touch input (or hovering gesture), the control unit detects the input by means of one of the first and second input units 140 and 150 and displays brief information on the content represented by the selected icon. The brief information of the content may be the metadata shown in Table 1.

Referring back to FIG. 2, it is determined whether the viewer is terminated, in step 221. If the viewer is terminated, the control unit 100 ends the master content generation procedure. If the viewer is not terminated, the methodology of FIG. 2 returns to step 213.

If the user selects the master content configured as described with reference to FIGS. 2 and 3, the control unit 100 displays a detailed view window 330 showing a master content item 331 and linked content items 333. If a content item is selected from the detailed view window, the controller 100 executes an application corresponding to the selected content item to play the content.

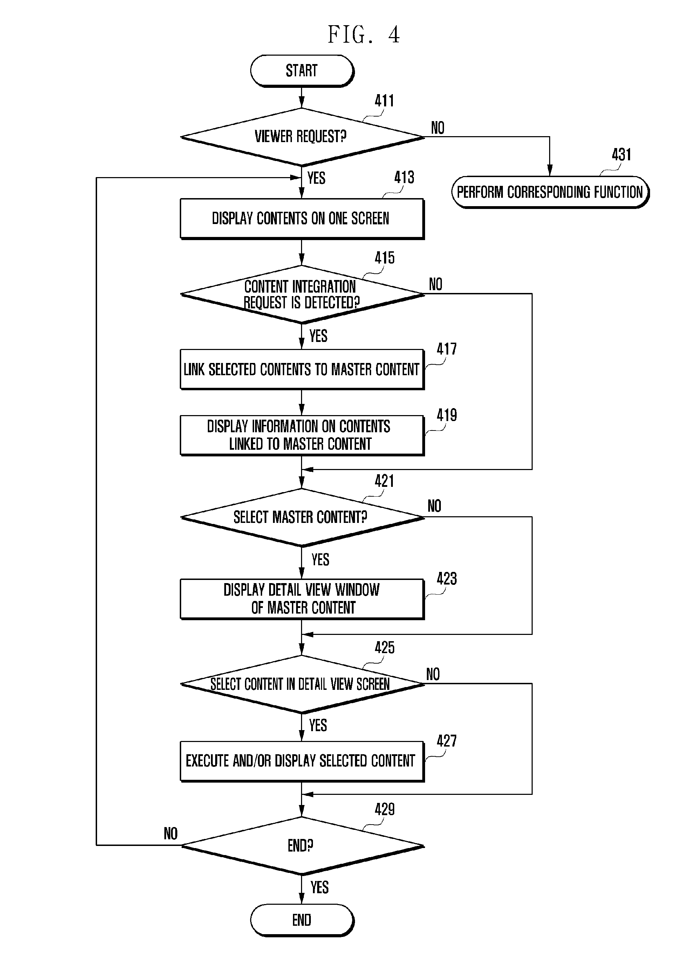

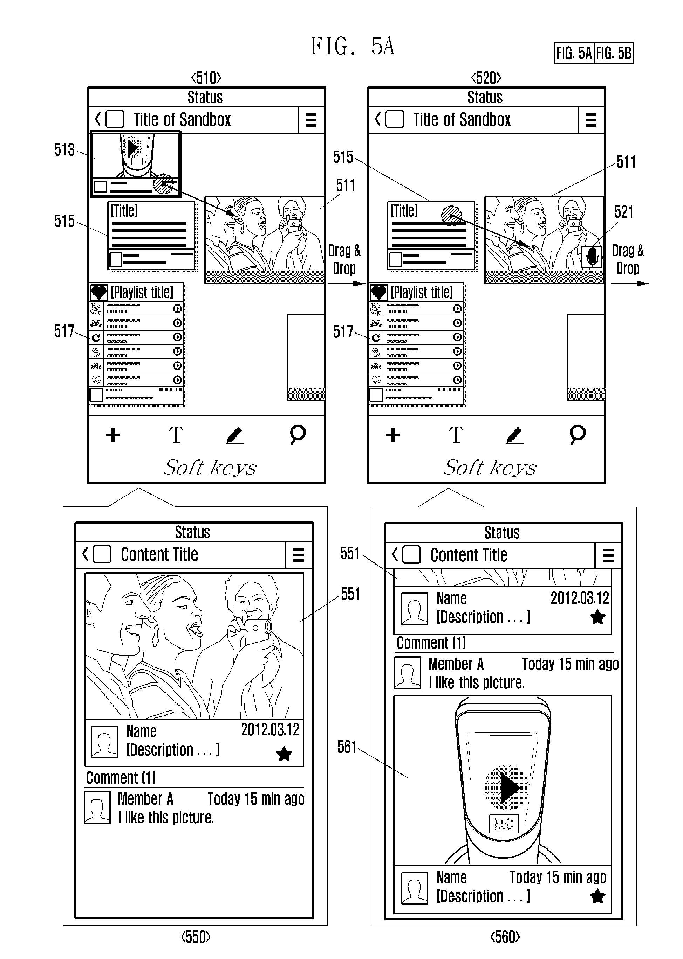

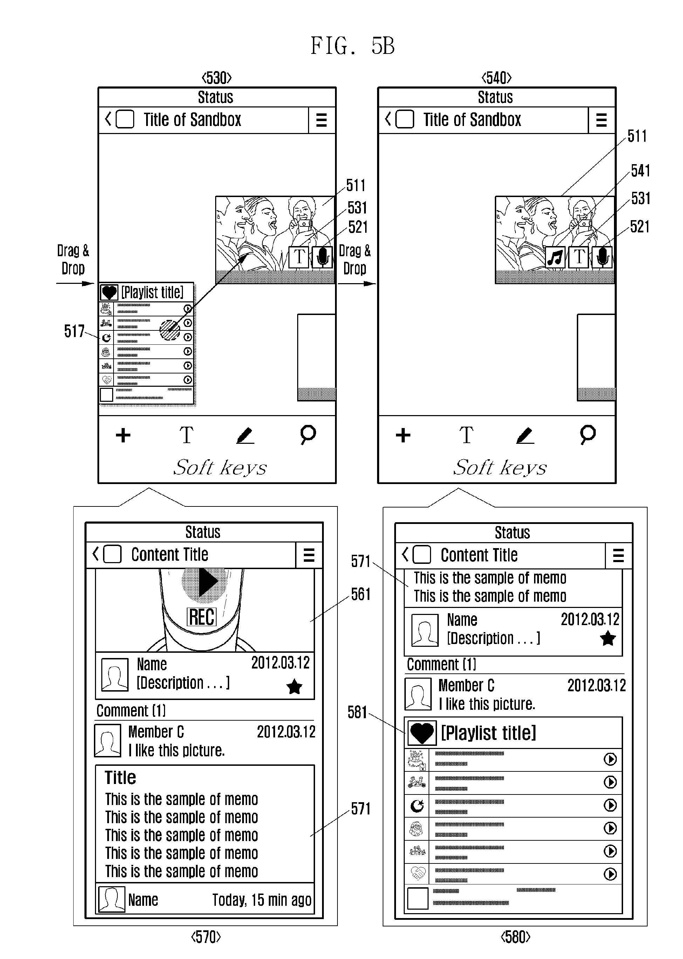

FIG. 4 is a flowchart illustrating a content item processing methodology in the mobile terminal, according to an embodiment of the present invention. FIGS. 5A and 5B are diagrams illustrating screens of the mobile terminal displayed in the methodology of FIG. 4, according to an embodiment of the present invention.

Referring to FIGS. 4, 5A, and 5B, if user input is detected, the control unit 180 determines whether the user input is a viewer request, in step 411. If the user input is not a viewer request, a corresponding function of the user input is performed, in step 431. If the user input is a viewer request, the viewer request is executed and the display unit 130 displays a plurality of content items on a viewer screen, in step 413.

In step 415, it is determined whether a content integration request is detected. If a content integration request is not detected, the methodology of FIG. 4 proceeds to step 421, which is described in greater detail below. If user input for moving a content is detected by the control unit 100, it is determined that a content integration request is detected, and the corresponding content is linked to the master content item, in step 417. An icon of the linked content is displayed in the icon display region of the master content, in step 419.

Referring to FIGS. 5A and 5B, if content 513 is dragged and dropped onto content 511 when the contents are displayed on screen 510 of the display unit 130, the control unit 100 detects the drag-and-drop action as a content integration request. The control unit 100 configures the content located at the drop position as the master content and links the dropped content 513 to the master content 511. The linked information may include an address of the content 513 stored in the memory 110 and the metadata, as listed in Table 1. The control unit displays an icon 521 of the content 513 in an icon display region of the master content 511, as shown in screen 520 and removes the content 513 from its original position on the screen of the display unit 130.

If the user drags and drops content 515 onto the master content 511, the control unit links the dropped content to the master content 511, displays an icon 531 of the linked content 515 on the master content 511, as shown in the screen 530 of FIG. 5B, and removes the content 515 from its original position on the screen of the display unit 130, through steps 413 to 419 of FIG. 4.

Similarly, if the user drags and drops content 517 onto the master content 511, the control unit 100 links the dropped content 517 to the master content 511, displays an icon 541 of the linked content 517 on the master content 511, as shown in screen 540 of FIG. 5B, and removes the content 517 from its original position on the screen of the display unit 130, through steps 413 to 419 of FIG. 4.

As described above, if the user provides input for moving content, the control unit 100 links the corresponding content to the master content, displays the icon of the linked content on the master content, and removes the linked content from its original position on the screen of the display unit 130.

The user may also move the master content. If the user drags and drops the master content onto another content, the control unit configures the content onto which the master content has been dropped as the new master content and links the old master content to the new master content. The control unit 100 controls the display of the icon of the original content of the old master content on the new master content. The icon of the old master content may be displayed to be distinct from other single content icon in color and/or size.

Referring back to FIG. 4, in step 421, it is determined whether the master content is selected. If the master content is not selected, the methodology proceeds to step 425, which is described in greater detail below. The control unit 100 detects the selection through one of the first and second input units 140 and 150. If the master content is selected, the control unit 100 displays a detailed view window of the master content and the linked contents, in step 423.

Referring again to FIGS. 5A and 5B, selected content may be the master content having a plurality of linked content or a single content. In the screen 510 of FIG. 5A, the content 511 is in the form of a single content. If the content 511 is selected, the control unit 100 displays a detailed view window 551 of the selected content 511, as shown in screen 550. The detailed view window 551 shows detailed information and metadata of the selected content 511. When the content 511 is selected in the form of master content, as shown in the screen 520, the control unit 100 displays the detailed view window showing original content item 551 and linked content item 561, as shown in screen 560. If the master content 511, to which the contents 513 and 515 are linked, as shown in the screen 530 of FIG. 5B, is selected, the control unit 100 displays detailed view window showing the original content 551 and the linked content 561 and 571, as shown in screen 570 of FIG. 5B. If the master content 511, to which the content 513, 515, and 517 are linked, as shown in the screen 540 of FIG. 5B, the control unit 100 displays detailed view window showing the original content 551 and linked content 561, 571, and 581, as shown in screen 580 of FIG. 5B.

The contents are linked to the master content in the order of content selection. The detailed view window shows the original content of the master content at the top thereof and the other contents subsequent to the master content arranged in linked order. If the master content is selected, the control unit 100 displays the detailed view window showing the original content of the master content and the linked contents based on the display mode of the display unit 130. In a portrait mode, the control unit 100 displays the detailed view window in which the master and linked contents are arranged from top to bottom in the linked order, as shown in the screens 550, 560, 570, and 580. The master content 551 is positioned at the top of the detailed view window, and the linked contents follow the master content in linked order. In a landscape mode, the control unit 100 displays the detailed view window in which the master and linked contents are arranged from left to right in the linked order. The master content is positioned at the left most side of the detailed view window, and the linked contents follows the master content in linked order.

If the user inputs a scroll command on the screen of the display unit 130 while displaying the detailed view window of the master content, the control unit 100 detects this through one of the first and second input units 140 and 150 and scrolls the detailed view window in a vertical direction (or a horizontal direction) according to a direction of the detected scroll input. When master content is linked to another master content, the user may manipulate commands to display the detailed view window of the linked master content by selecting it in the detailed view window of the other master content.

Referring back to FIG. 4, in step 425 it is determined whether content in the detailed view window is selected. If the user does not select content in the detailed view window, the methodology proceeds to step 429, which is described in greater detail below. If the user selects a certain content in the detailed view window of the master content, the control unit 100 executes an application corresponding to the selected content, in step 427. Specifically, if content is selected in the detailed view window showing the linked contents, the control unit 100 executes the application corresponding to the selected content. It is determined whether the methodology is to terminate, in step 429. If the methodology is to continue, it returns to step 413. If the methodology is to terminate, it ends after step 429.

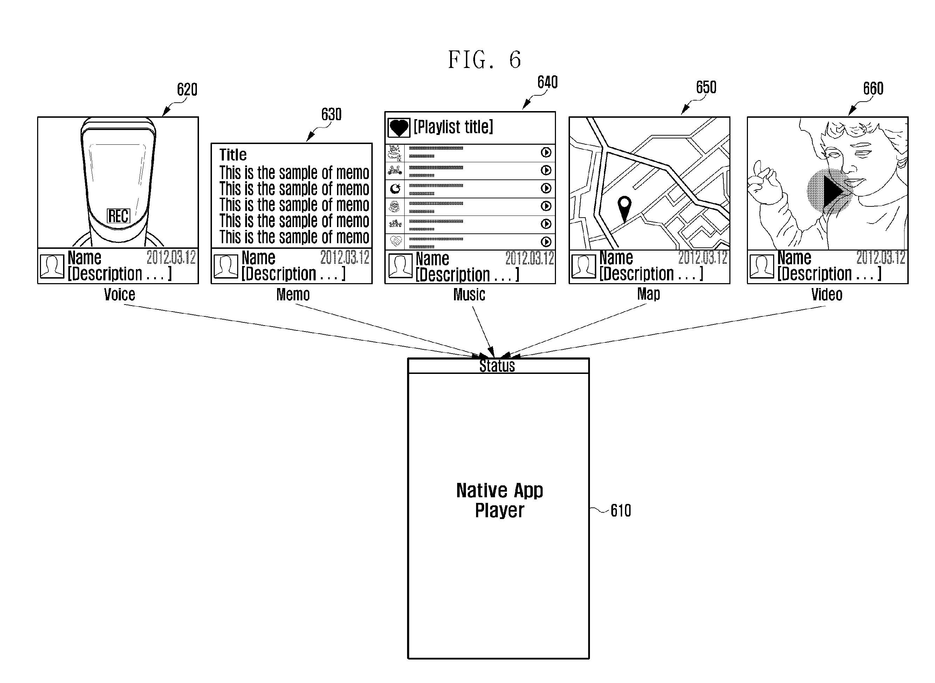

FIG. 6 is a diagram illustrating a configuration of a detailed view window of master content for use in the content processing methodology, according to an embodiment of the present invention. Audio content 620, memo content 630, music content 640, map content 650, and video content 660 are linked to master content 610. Thus, if the master content 610 is selected, the linked contents 620 to 660 are displayed within the detailed view window, in series. The user navigates the linked contents through scroll input, as described above. If one of the linked content is selected in the detailed view window, the control unit 100 executes an application corresponding to the selected content. According to an embodiment of the present invention, if a content is selected from the detailed view window of the master content, the portable terminal calls the application corresponding to the selected content and the application processes the selected content.

As described above, the content processing method and apparatus of the portable terminal is capable of configuring one of the correlated contents as the master content and integrally manages the contents linked to the master content. The linked content can be separated from the master content so as to be edited independently.

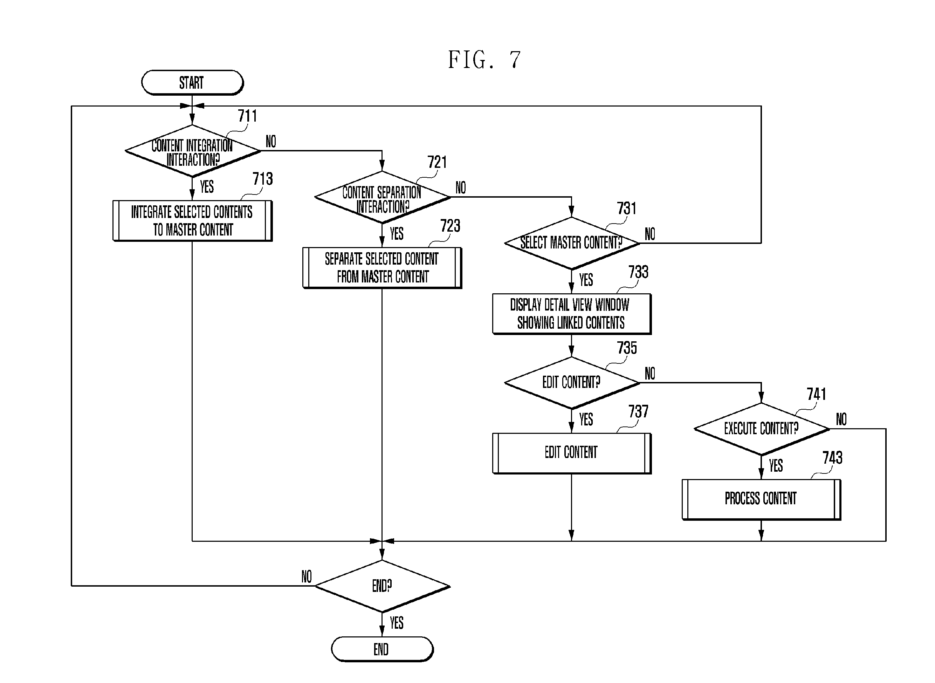

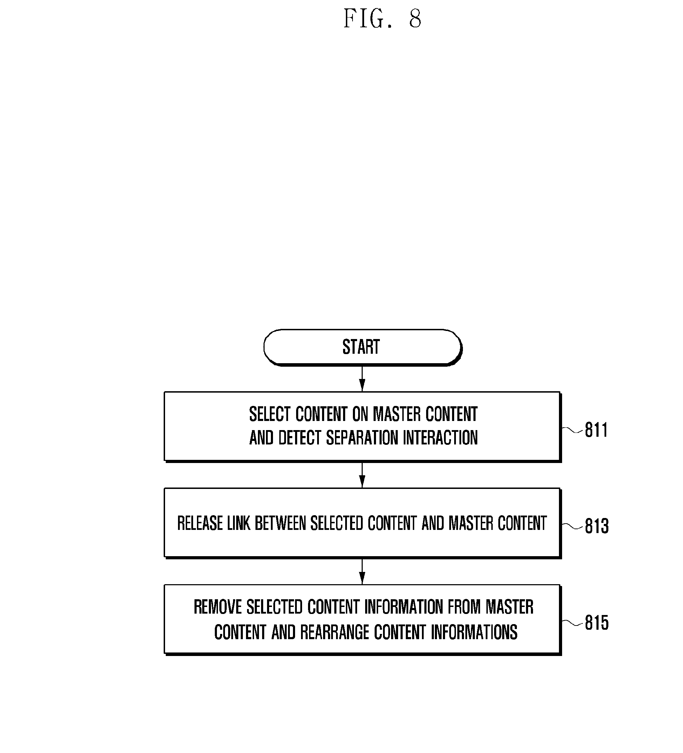

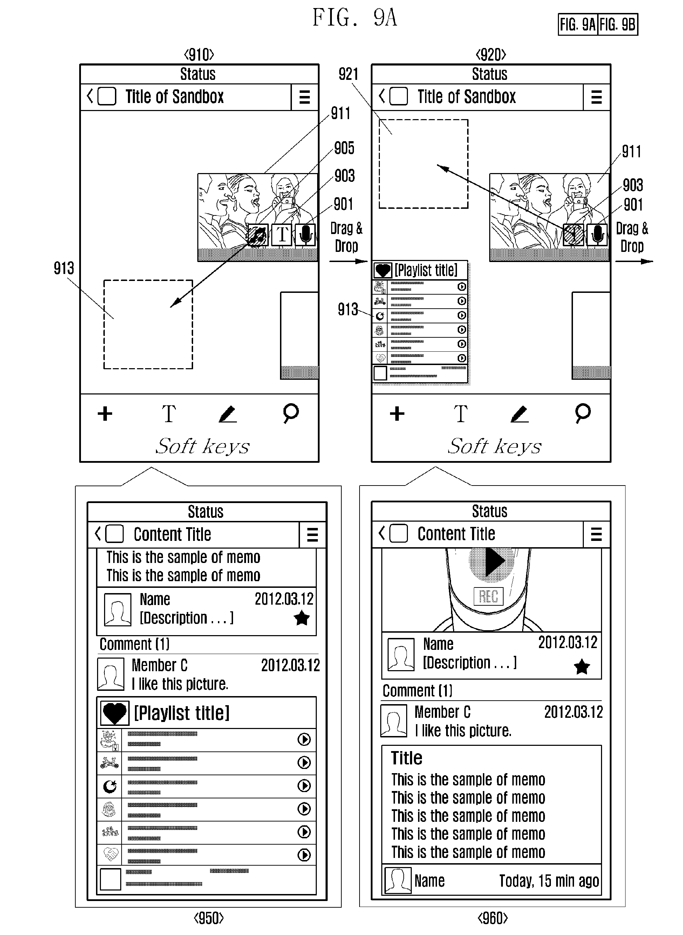

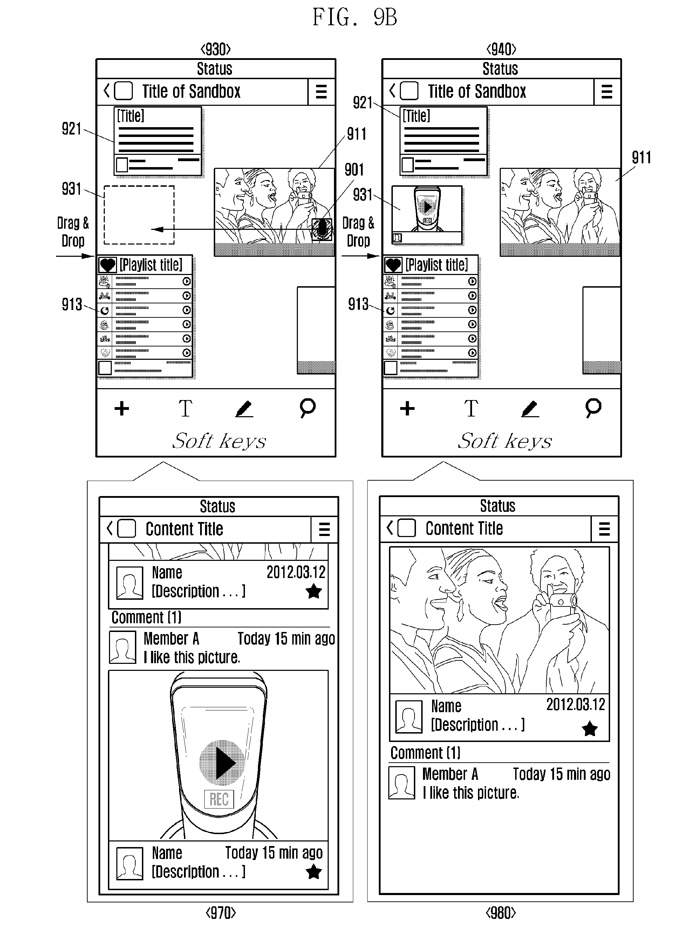

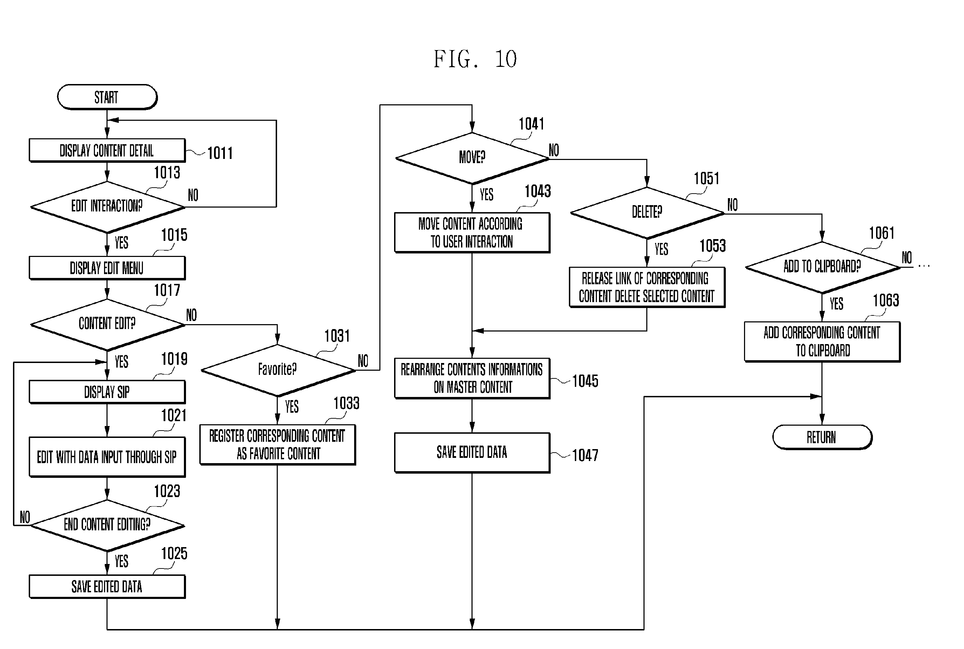

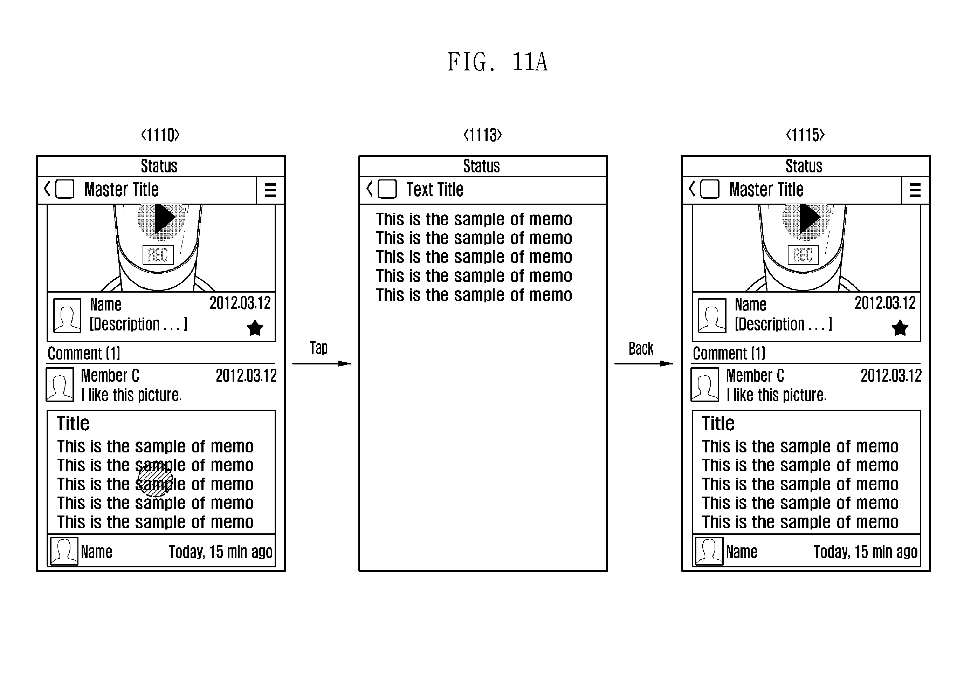

FIG. 7 is a flowchart illustrating a methodology for separating linked content from the master content and editing the separated content, according to an embodiment of the present invention. FIG. 8 is a flowchart illustrating a linked content separation methodology from FIG. 7, according to an embodiment of the present invention. FIGS. 9A and 9B are diagrams illustrating screens displayed in the mobile terminal in the content-separating methodology of FIG. 8, according to an embodiment of the present invention. FIG. 10 is a flowchart illustrating a separated content editing methodology of FIG. 7, according to an embodiment of the present invention. FIGS. 11A to 11E are diagrams illustrating screens displayed in the mobile terminal the content-editing methodology of FIG. 10, according to an embodiment of the present invention.

Referring to FIGS. 7, 8, 9A, 9B, 10, and 11A to 11E, the control unit 100 monitors to detect user input for configuring a master content. Specifically, in step 711 of FIG. 7, it is determined whether received user input is a master content integration request. If the user input is the master content integration request, the control unit 100 configures one of the content selected from a plurality of contents displayed on the screen as the master content, in step 713.

If the user input is not the master content integration request, the control unit 100 determines whether the user input is a content separation request, in step 721. If the user input is the content separation request, the control unit releases a link between selected content and the master content, in step 723, as described in detail below with reference to FIG. 8. The control unit 100 displays the separated content on the screen of the display unit 130.

Referring to FIG. 8, if the user inputs a touch to one of the icons displayed on the master content, and drags and drops the selected icon at any position outside of the master content, the control unit 100 determines that this user input is a separation request, in step 811. The control unit 100 releases the link between the selected content and the master content, in step 813, and displays the separated content at a dropped position. The control unit 100 removes the content information (icon) of the link-released content from the icon display region of the master content, and rearranges the remaining icons in the icon display region of the master content, in step 815.

Referring to FIGS. 9A and 9B, three contents are linked to master content 911 in screen 910., The master content 911 has a detailed view window 950. If an icon 905 is dragged and dropped at a position outside of the master content 911, the control unit 100 releases the link between content 913 and the master content 911, and removes the icon 905 from the icon display region of the master content 911. The detailed view window of the content 911 is then shown as screen 960, and the link of the content 913 is released. In screen 920, if icon 903 is dragged from the icon display region of the master content 911 and dropped at a position outside of the outline of the master content 911, the control unit 100 releases the link between content 921 and the master content 911, and removes the icon 903 from the icon display region of the master content 911. The detailed view window of the content 911 is displayed as shown in screen 970. In screen 930, icon 901 is dragged from the icon display region of the master content 911 and dropped at a position outside of the master content 911, the control unit 100 releases the link between content 931 and the master content 911 and removes the icon 901 from the icon display region of the master content 911. The detailed view window of the content 911 is displayed as shown in screen 980 and the link to the content 931 is released. In screen 940, the content 911 is in a state of a single content.

In the screen 910 of FIG. 9A, if the user selects the content icon 903 and drags and drops the selected icon 903 at a position, the control unit 100 displays the content 921 corresponding to the icon 903 at the drop position on the screen of the display unit 130 and removes the icon 903 from the image display region of the master content 911. The icons remaining in the icon display region are shifted so as to be rearranged sequentially.

In an embodiment of the present invention, if the icon of the master content which has been generated automatically in integrating the correlated contents is dragged and dropped at a position outside of the outline of the master content, the selected content icon is displayed as the thumbnail image of the original content. Specifically, if a user interaction for separating an icon from the master content is detected, the control unit 100 detects this, displays the content corresponding to the selected icon on the viewer screen, and releases the link between the corresponding content and the master content.

Referring back to FIG. 7, if it is determined that the user input is not a content separation request at step 721, it is determined whether master content is selected at step 731. If the master content is selected (tapped), the control unit 100 detects the selection of the master content and displays the detailed view window of the master content, in step 733. In step 735, it is determined whether an edit command is detected. If an edit command for editing the master content is detected in the state that the detailed view window is displayed, the control unit 100 edits the master content according to the user's editing interaction, in step 737.

Referring now to FIG. 10, the master content can be edited in such a procedure that if the master content is selected, the control unit 100 displays the detailed view window of the master content, which shows content linked thereto, in step 1011. When the detailed view window is displayed, if the user makes a scroll or swipe input, the control unit 100 scrolls the contents listed in the detailed view window, such that the user navigates the contents to select a target content. In step 1013, it is determined whether a user interaction is an edit interaction. If the user interaction for editing the detailed view window of the content is detected, the control unit 100 displays an edit menu at step 1015. When the touched state to the detailed view window of the content is maintained over a predetermined duration (tap and hold), the control unit 100 determines that an edit interaction is input. In an embodiment of the present invention, the edit menu may include at least one of an edit menu item, a favorite menu item, a move menu item, a delete menu item, an add to clipboard menu item, a save menu item, etc. In step 1017 it is determined whether a content edit menu item is selected. If a content edit menu item is selected, the control unit displays an input means (Soft Input Panel; SIP) for editing the content, in step 1019. In step 1021, the content is edited. In step 1023, it is determined whether content editing is terminated. If a user interaction for terminating the content editing process is received, the control unit 100 saves the edited content data, in step 1025.

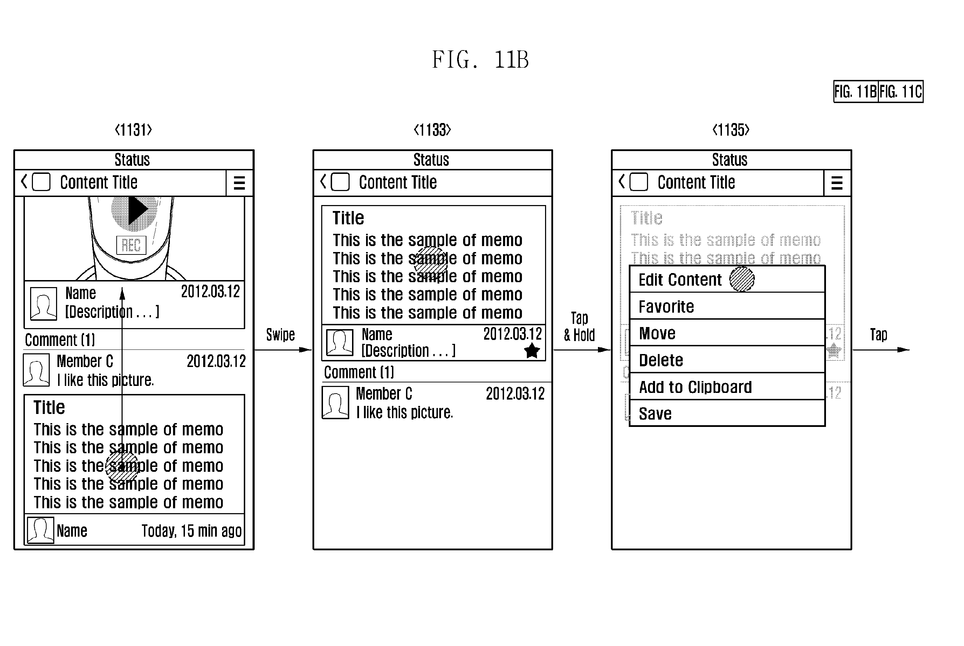

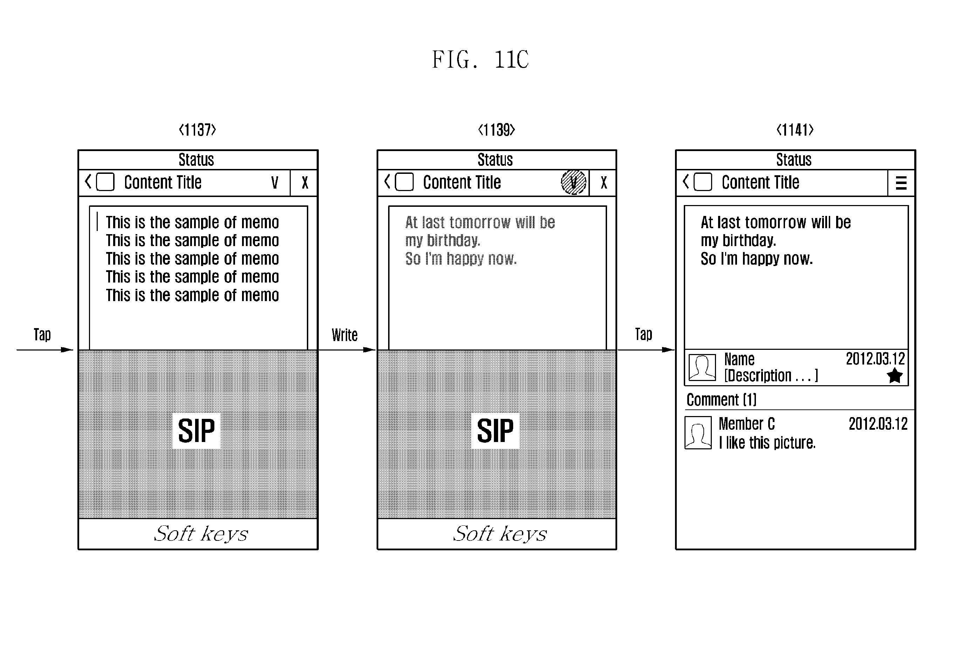

Referring to FIGS. 11B and 11C, if the master content is selected, the control unit 100 displays the detailed view window showing the contents linked to the master content, as shown in screen 1131 of FIG. 11B. If a scroll or swipe gesture is detected, the detailed view window of the content selected by the user is displayed on the screen of the display unit 130, as shown in screen 1133 of FIG. 11B. If the edit interaction (here, tap and hold) is detected, the control unit displays the edit menu as shown in screen 1135. If the edit content menu item is selected (tapped) as shown in the screen 1135 of FIG. 11B, the control unit displays SIP, as shown in screen 1137 of FIG. 11C. If the user makes an input using the SIP, the control unit 100 performs an editing operation with the data input by the user as shown in screen 1139. If the editing completes, the control unit 100 stores the edited content in the memory 110, as shown in the screen 1141 of FIG. 11C.

Referring back to FIG. 10, if it is determined that the edit menu item is not selected in step 1017, it is determined whether a favorite menu item is selected in step 1031. If the favorite menu item is selected, the control unit 100 registers the corresponding content as favorite content, in step 1033.

If it is determined that the favorite menu item is not selected in step 1031, it is determined whether the move menu item is selected in step 1041. If the move menu item is selected, the control unit 100 moves the link positions of the selected contents according to the user interaction, in step 1043, and rearranges the position of the content information (i.e., icon) of the master content.

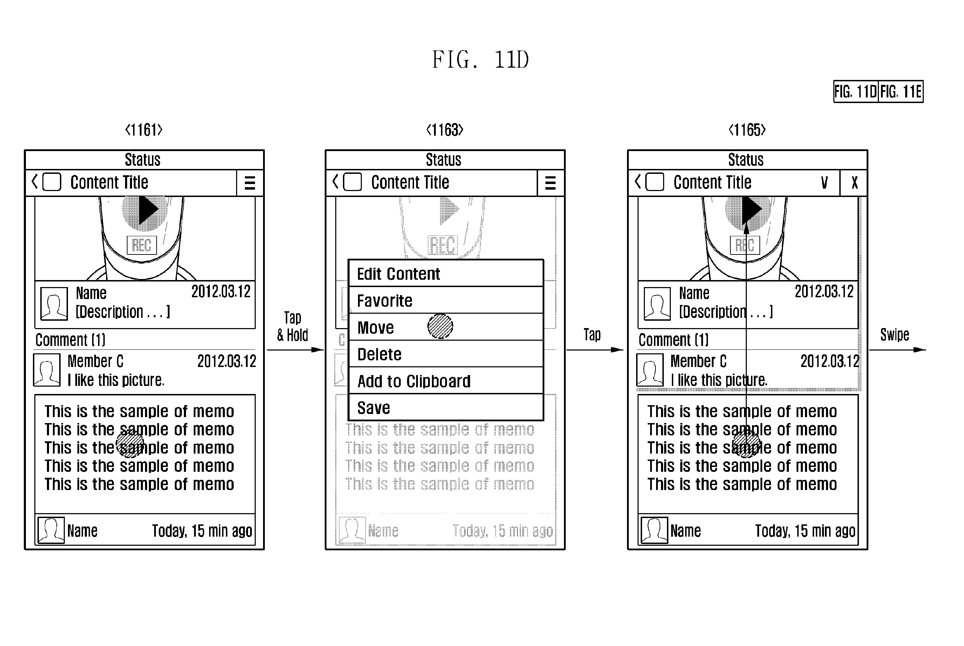

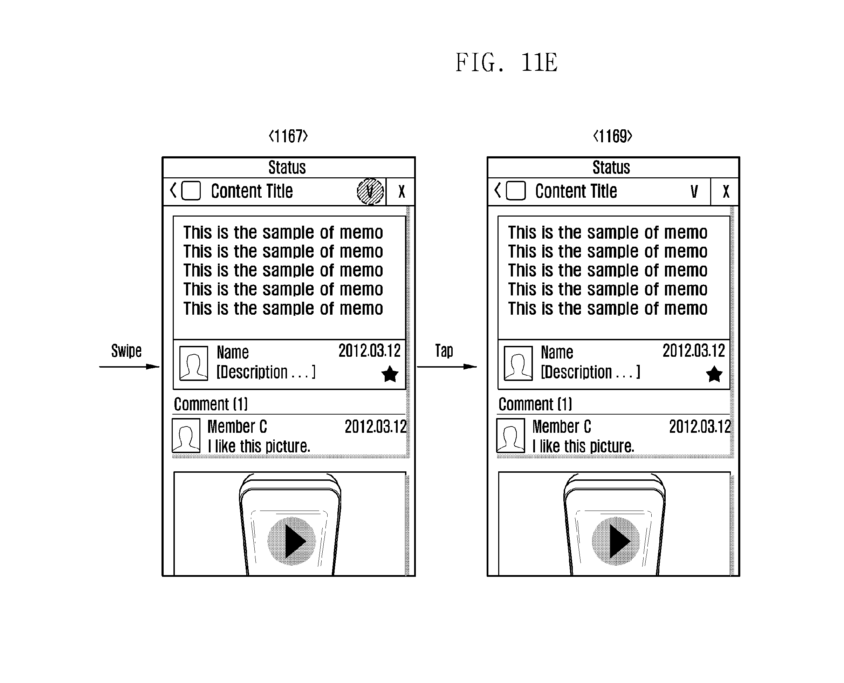

Referring now to FIGS. 11D and 11E, if an edit interaction (e.g. tap and hold) is made to a specific content in the detail view window of a content as shown in screen 1161 of FIG. 11D, the control unit 100 displays an edit menu as shown in screen 1163 of FIG. 11D. If the move menu item is selected, the control unit 100 moves the linked content on the master content, in step 1041. The user makes an interaction (e.g., a swipe) for moving the detailed view window of the selected content, as shown in screen 1165 of FIG. 11D. The control unit 100 moves the link positions of the contents as shown in screen 1167 of FIG. 11E according to the interaction, in step 1043 of FIG. 10, rearranges the icons in the icon display region of the master content, in step 1045 of FIG. 10, and stores the edited data as shown in screen 1169, in step 1047 of FIG. 10.

If it is determined that the move menu item is not selected in step 1041, it is determined whether the delete menu item is selected in step 1051. If the delete menu item is selected, the control unit 100 deletes the selected content and releases the link of the deleted content, in step 1053. The content information (i.e. icons) in the icon display region of the master content are rearranged, in step 1045, and the edited data is stored, in step 1047.

If it is determined that the delete menu item is not selected in step 1051, it is determined whether the add to clipboard menu item is selected in step 1061. If the add to clipboard menu item is selected, the control unit 100 adds the selected content to the clipboard, in step 1063. If it is determined that the add to clipboard menu item is not selected in step 1061, the methodology may continue with additional menu items that are provided in the menu.

As described above, if the edit interaction is input after selecting a specific content from the detailed view window of the master content, the control unit 100 selects the content with the edit interaction as the edit target content. Afterward, the control unit 100 edits the selected content (content linked to the master content) using the edit menu item selected from the edit menu. For example, it is possible to tap and hold a specific content from the detailed view window of the master content and edit individual contents with the edit tools provided in the edit menu.

Referring back to FIG. 7, if it is determined that the user input is not to edit content in step 735, it is determined whether the user input is to execute content in step 741. If a specific content is selected in the state that the detailed view window of the master content, the control unit 100 detects the execution request for the corresponding content and executes the selected content, in step 743.

Referring to FIG. 11A, if a user interaction (e.g., a tap) is for selecting linked content from the detailed view window of the master content in screen 1110, the control unit 100 detects the execution request for the content and executes the application (here, memo application) corresponding to the selected content, as shown in screen 1113 of FIG. 11A, to execute the content. If the user provides input for terminating the application (e.g., a cancel key), the control unit 100 detects this and returns to the detailed view window of the master content, as shown in screen 1115 of FIG. 11A. The content can be executed in the same method described above with reference to FIG. 6 through the methodology of FIG. 4. Specifically, the individual content linked to the master content are executed with the corresponding, or native, applications.

Software components including instructions or code for performing the methodologies described herein may be stored in one or more of associated memory devices (e.g., Read Only Memory (ROM), fixed or removable memory) and, when ready to be utilized, loaded in part or in whole (e.g., into Random Access Memory (RAM)) and executed by a Central Processing Unit (CPU).

It will be appreciated that embodiments of the present invention can be realized in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention. Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

While the invention has been shown and described with reference to certain embodiments thereof, it will be understood by those skilled in the art that various changes in form and detail may be made therein without departing from the spirit and scope of the invention as defined by the appended claims.

## Claims

1. A method for content processing comprising the steps of:
displaying a plurality of contents;
determining whether an input is received for moving a selected content of the plurality of contents onto a target content of the plurality of contents;
configuring the target content as a master content, when the input is received;
linking the selected content to the master content; and
displaying an indicator of the selected content on the master content.

2. The method of claim 1, wherein the input is a drag and drop operation, and the target content located at a position where the selected content is dragged and dropped is configured as the master content.

3. The method of claim 1 or claim 2, further comprising:
linking another selected content to the master content, when an input is received for moving the other selected content onto the master content; and
adding an indicator of the other selected content to the master content.

4. The method of any preceding claim, further comprising removing the selected content from the screen when the selected content is linked to the master content.

5. The method of any preceding claim, wherein the indicator displayed on the master content is an icon, and icons of selected content are added to the master content in sequence.

6. The method of any preceding claim, wherein displaying the plurality of contents comprises arranging the plurality of contents in a tile view, the plurality of contents being presented as thumbnail images.

7. The method of any preceding claim, further comprising displaying a detailed view window showing the master content and the linked selected content, when the master content is selected.

8. The method of claim 7, wherein displaying the detailed view window comprises:
listing the linked selected content subsequent to a master content position at a top of the detailed view window in an order in which the linked selected content was linked to the master content; and
scrolling the master content and the linked selected content across the detailed view window according to a scroll input.

9. The method of claim 7 or claim 8, further comprising, when content is selected from the detailed view window, executing an application corresponding to the content to execute the content.

10. An apparatus comprising:
a display that displays a plurality of contents;
an input unit that receives input for processing content;
a memory that stores link information of linked contents;
a control unit that determines whether an input is received for moving a selected content of the plurality of contents onto a target content of the plurality of contents, configures the target content as a master content when the input is received, links the selected content to the master content, and displays the master content with an indicator of the selected content.

11. The terminal of claim 10, wherein the input is a drag and drop operation, the control unit configures the target content located at a position where the selected content is dropped as the master content.

12. The terminal of claim 10 or claim 11, wherein the control unit links another selected content to the master content, when an input is received for moving the other selected content onto the master content, and adds an indicator of the other selected content to the master content.

13. The terminal of any one of claims 10 to 12, wherein the control unit removes the selected content from the display when the selected content is linked to the master content.

14. The terminal of any one of claims 10 to 13, wherein the indicator displayed on the master content is an icon, and the control unit stacks the icons of selected content in sequence.

15. The terminal of any one of claims 10 to 14, wherein the control unit arranges the plurality of contents on the display in a tile view, the plurality of contents being presented as thumbnail images.
